# EUROPÄISCHE PATENTSCHRIFT

(11) **EP 2 096 316 B1**
(45) Veröffentlichungstag und Bekanntmachung des Hinweises auf die Patenterteilung: **01.05.2019**
(21) Anmeldenummer: 09002677.4
(22) Anmeldetag: 25.02.2009
(51) Int. Cl.: F01D 11/08, F04D 27/02, F04D 29/54, F04D 29/68

(54) **Gehäusestrukturierung für Axialverdichter im Nabenbereich**
Housing structuring for axial compressor in the hub area
Structuration de boîtier pour compresseur axial dans la zone du moyeu

(30) Priorität: 28.02.2008 DE 102008011644
(43) Veröffentlichungstag der Anmeldung: 02.09.2009
(73) Patentinhaber: Rolls-Royce Deutschland Ltd & Co KG, 15827 Blankenfelde-Mahlow (DE)
(72) Erfinder: Johann, Erik, 10963 Berlin (DE)
(74) Vertreter: Hoefer & Partner Patentanwälte mbB

(56) Entgegenhaltungen:
- EP-A1- 1 614 863
- DE-A1- 3 521 798
- DE-A1- 10 330 084

## Beschreibung

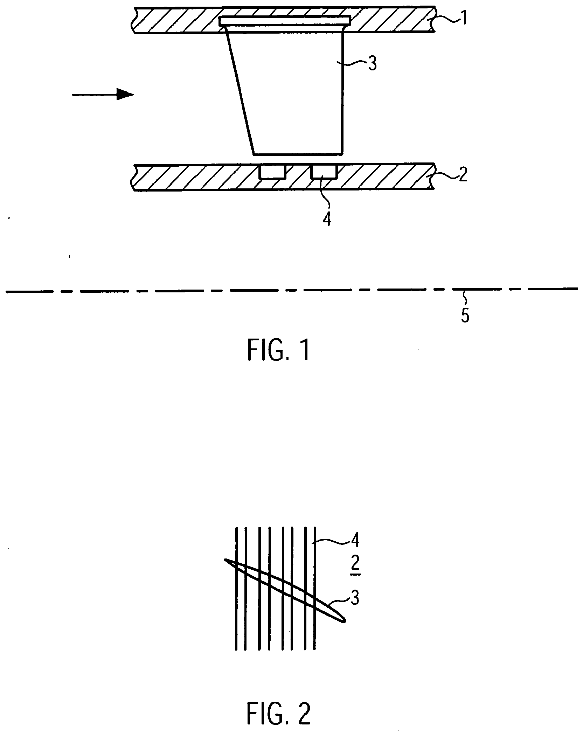

Die aerodynamische Belastbarkeit und die Effizienz von Strömungsarbeitsmaschinen, beispielsweise Bläsern, Verdichtern, Pumpen und Ventilatoren, wird insbesondere durch das Wachstum und die Ablösung von Grenzschichten im Rotor- und Statorspitzenbereich nahe der Gehäuse- beziehungsweise Nabenwand begrenzt. Dies führt bei Schaufelreihen mit Laufspalt bei höherer Belastung zu Rückströmerscheinungen und dem Auftreten von Instabilität der Maschine. Strömungsarbeitsmaschinen nach dem Stand der Technik besitzen entweder keine besonderen Merkmale zur Abhilfe in diesem Bereich (siehe Fig.1) oder es werden als Gegenmaßnahme sogenannte "Casing Treatments" eingesetzt, die aus verschiedensten Konfigurationen aus Kammern und/oder eckigen Schlitzen, zumeist im Gehäuse über dem Rotor, bestehen.

Bekannte Lösungen werden beispielsweise in folgenden Dokumenten offenbart:
US 2005/0226717 A1 (Flow Control Arrangement)
DE 101 35 003 C1 (Verdichtergehäusestruktur)
DE 103 30 084 A1 (Rezirkulationsstruktur für Turboverdichter)

Die vorliegende Erfindung bezieht sich somit auf Strömungsarbeitsmaschinen wie etwa Bläser, Verdichter, Pumpen und Ventilatoren, sowohl in axialer, halbaxialer als auch in radialer Bauart. Das Arbeitsmedium oder Fluid kann gasförmig oder flüssig sein.

Die erfindungsgemäße Strömungsarbeitsmaschine kann eine oder mehrere Stufen mit jeweils einem Rotor und einem Stator umfassen.

Erfindungsgemäß besteht der Rotor aus einer Anzahl von Schaufeln, die mit der rotierenden Welle der Strömungsarbeitsmaschine verbunden sind und Energie an das Arbeitsmedium abgeben. Der Rotor ist mit freiem Schaufelende am Gehäuse ausgeführt. Der erfindungsgemäße Stator besteht aus einer Anzahl feststehender Schaufeln, die gehäuseseitig mit festem Schaufelende ausgeführt sind.

Erfindungsgemäß kann die Strömungsarbeitsmaschine vor dem ersten Rotor eine besondere Form eines Stators, ein sogenanntes Vorleitrad, aufweisen.

Erfindungsgemäß kann mindestens ein Stator oder Vorleitrad abweichend von der unbeweglichen Fixierung auch drehbar gelagert sein, um den Anströmwinkel zu verändern. Eine Verstellung erfolgt beispielsweise durch eine von außerhalb des Ringkanals zugängliche Spindel.

In besonderer Ausgestaltung kann die Strömungsarbeitsmaschine mindestens eine Reihe verstellbarer Rotoren aufweisen.

Erfindungsgemäß kann die Strömungsarbeitsmaschine alternativ auch eine Nebenstromkonfiguration derart aufweisen, dass sich der einstromige Ringkanal hinter einer bestimmten Schaufelreihe in zwei konzentrische Ringkanäle aufteilt, die ihrerseits mindestens jeweils eine weitere Schaufelreihe umfassen. Fig. 2 zeigt Beispiele erfindungsgemäß relevanter Strömungsarbeitsmaschinen.

Im Einzelnen betrifft die Erfindung die Form eines Abschnitts der Ringkanalwand entlang der Nabe sowie die Anordnung und Formgebung von Ausnehmungen in besagtem Ringkanalwandabschnitt im Bereich einer Schaufelreihe mit freiem Ende und Laufspalt einer Strömungsarbeitsmaschine.

Die EP 1 614 863 A1 beschreibt eine Strömungsstruktur für einen Turboverdichter, bei welcher in einem feststehenden Gehäuse eine Ringkammer ausgebildet ist, in welche Fluid eingeleitet wird. im Bereich der Einleitung des Fluids sind Leitelemente ausgebildet. Ein Teil des Fluids strömt zurück in den Hauptströmungspfad, während ein anderer Teil des Fluids extern abgeleitet wird. Dieses Dokument beschreibt auch eine Ausführungsform bei der an der Nabe des Turboverdichters eine gegen die Strömungsrichtung geneigten Ringkammer im Spitzenbereich der Leitschaufeln angeordnet ist.

Die DE 103 30 084 A1 zeigt eine Rezirkulationsstruktur für Turboverdichter mit einem in einem feststehenden Gehäuse ausgebildeten Ringkanal, in welchem eine Vielzahl von Leitelementen angeordnet sind. Diese beeinträchtigen die Strömung, die gegen die Hauptströmungsrichtung des Hauptströmungspfads rückgeführt und rezirkuliert wird. Auch dieses Dokument beschreibt zusätzlich eine an einer Nabe angeordneten Rezikulationsstruktur mit einer gegen die Strömungsrichtung geneigten Ringkammer im Spitzenbereich der Leitschaufeln.

Der vorliegenden Erfindung liegt die Aufgabe zugrunde, eine Strömungsarbeitsmaschine der eingangs genannten Art zu schaffen, welche unter Vermeidung der Nachteile des Standes der Technik eine wirkungsvolle Grenzschichtbeeinflussung im Schaufelspitzenbereich aufweist.

Erfindungsgemäß wird die Aufgabe durch die Merkmalskombination des Hauptanspruchs gelöst, die Unteransprüche zeigen weitere vorteilhafte Ausgestaltungen der Erfindung.

Erfindungsgemäß ist somit eine Möglichkeit geschaffen worden, die Strömungsbeeinflussung mit Hilfe der Gehäusestrukturierung durch Verbesserung der Strömungsrandbedingungen der Nabenstrukturierung zu optimieren. Erfindungsgemäß ist somit eine angepasste Formgebung der Umfangsnuten hinsichtlich ihrer axialen Lage auf dem Rotor unterhalb der Statoren erreicht. Die Nuten haben entsprechende Querschnitte und können erfindungsgemäß somit geometrisch einfache als auch geometrisch komplexe Freiformflächen sein.

Die erfindungsgemäße Nabenstrukturierung (Hub Treatment) kann sowohl mit fester, gleichbleibender Geometrie als auch mit adaptiver, zeitlich veränderlicher Geometrie ausgebildet sein.

Erfindungsgemäß ergibt sich somit eine Verbesserung der Verdichterstabilität, der auslegungsbedingt auch zu einer Verbesserung des Wirkungsgrades führen kann, wenn durch die Maßnahme die saugseitige Ablösung verringert werden kann.

Durch die erfindungsgemäße Ausgestaltung der Nabenstrukturierung wird eine optimale Strömung in der Umfangsnut, insbesondere in Abhängigkeit der axialen Länge, sowie eine optimale Wechselwirkung mit der Hauptströmung erreicht.

Neben der oben genannten Ausführung als Umfangsnut bietet sich auch eine Ausführung als Axialnut an, wobei die Ausführung gegenüber der Radialen und der Achse geneigt sein kann. Durch eine nach vorne geneigte Form, wird der Ausströmvektor flacher, so dass sich eine verlustärmere Einströmung ergibt.

Erfindungsgemäß ist somit vorgesehen, im Bereich der Nabe die Nabenkontur des Verdichters entsprechend zu ändern und zu modifizieren, um den Nabenbereich der freien Schaufelenden der Statoren hinsichtlich der Strömung zu optimieren.

Im Folgenden wird die Erfindung anhand von Ausführungsbeispielen in Verbindung mit der Zeichnung beschrieben. Dabei zeigen:
- Fig. 1 und 2: typische Ausgestaltungsformen der erfindungsgemäßen Umfangsnuten,
- Fig. 3-9: Darstellungen zur Geometriedefinition,
- Fig. 10-18: Varianten unterschiedlicher Ausgestaltungsformen.

Bei den nachfolgenden Ausführungsbeispielen sind gleiche Teile jeweils mit gleichen Bezugszeichen versehen.

Die Fig. 1 zeigt erfindungsgemäße Umfangsnuten (ringförmige Ausnehmungen 4), welche zentrisch und zueinander parallel an einer rotierenden Welle 2 (Nabe) angeordnet sind und jeweils eine gleichbleibende Dicke und Breite aufweisen (siehe Fig. 2). Angrenzend an die Ausnehmungen 4 ist erfindungsgemäß eine Schaufel 3 angeordnet, welche sich durch die Drehung der rotierenden Welle 2 relativ zu dem Gehäuse 1 bewegt.

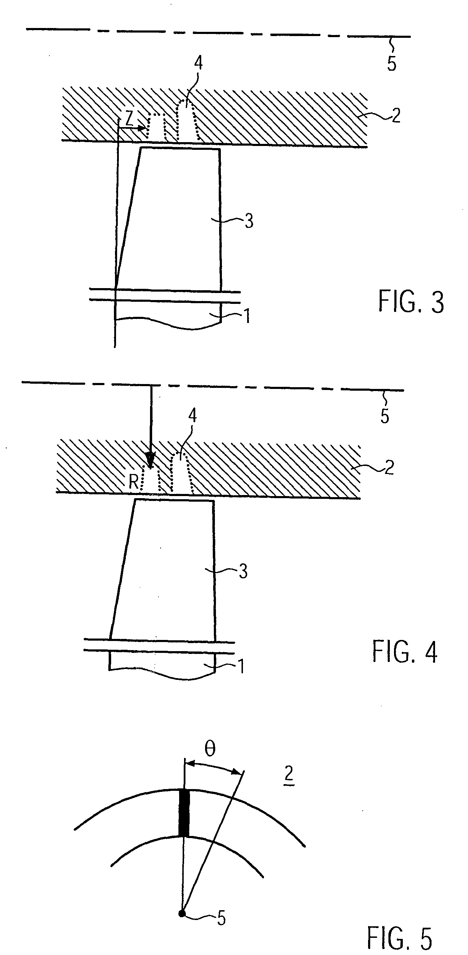

Die Schaufel 3 bildet somit eine mit dem Gehäuse 1 verbundene Statorschaufel, relativ zu welcher sich die rotierende Welle 2 um eine Mittelachse/Drehachse/Maschinenachse dreht. Die Fig. 3 zeigt die Zuordnung der axialen Position Z der Ausnehmung 4, die Fig. 4 zeigt die radiale Tiefe R, bezogen auf die Mittelachse (Drehachse) 5. Die Fig. 5 zeigt die Definition der Umfangsneigung θ.

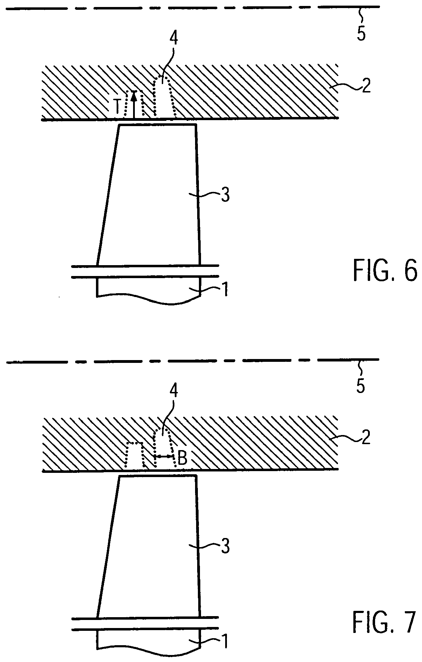

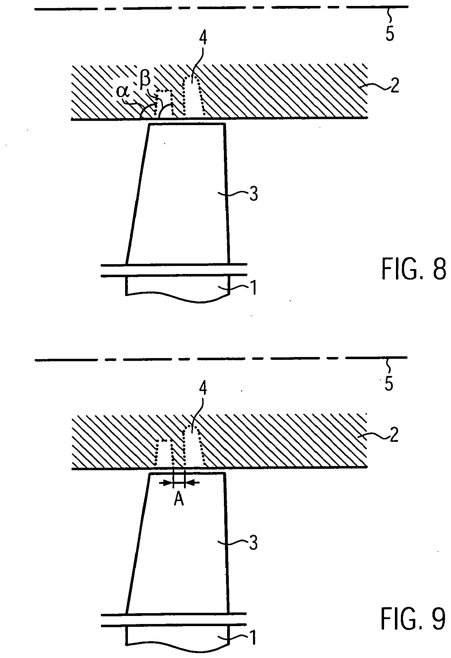

Aus der Fig. 6 ist die Tiefe der Nut, bezogen auf die Oberfläche der rotierenden Welle 2 mit T dargestellt, die Fig. 7 zeigt die axiale Breite B der Ausnehmung 4 (Ringnut). Die Neigung in axialer Richtung der Ausnehmung 4 ist in Fig. 8 dargestellt, die Vorderkante ist um den Winkel α geneigt, während die Hinterkante um den Winkel β geneigt ist. Die Begriffe Vorderkante und Hinterkante beziehen sich jeweils auf die Strömungsrichtung, welche in den Darstellungen von links nach rechts erfolgt. Die Fig. 9 zeigt den Abstand A zweier benachbarter Ausnehmungen 4.

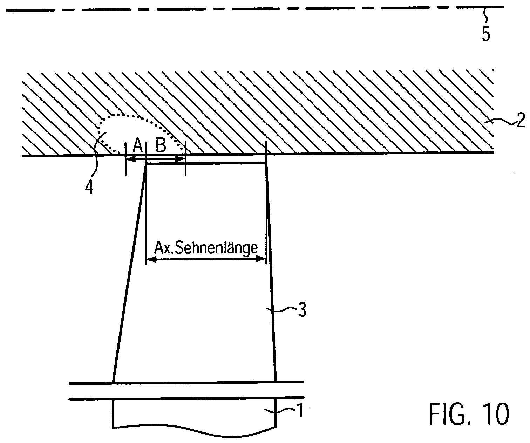

Die Fig. 10 zeigt einen ersten Aspekt der erfindungsgemäßen Ausgestaltung, aus welchem sich mit A die maximale axiale Sehnenlänge vor der Vorderkante der Schaufel 3 ergibt. B zeigt die axiale Sehnenlänge in Strömungsrichtung. A beträgt bevorzugterweise maximal 30 % der axialen Sehnenlänge, während B bevorzugterweise maximal 50 % der axialen Sehnenlänge, bevorzugterweise 30 % der axialen Sehnenlänge beträgt. Hieraus ergibt sich eine maximale Länge der Ausnehmung 4 von ca. 80 % der axialen Sehnenlänge, bevorzugterweise von 50 %.

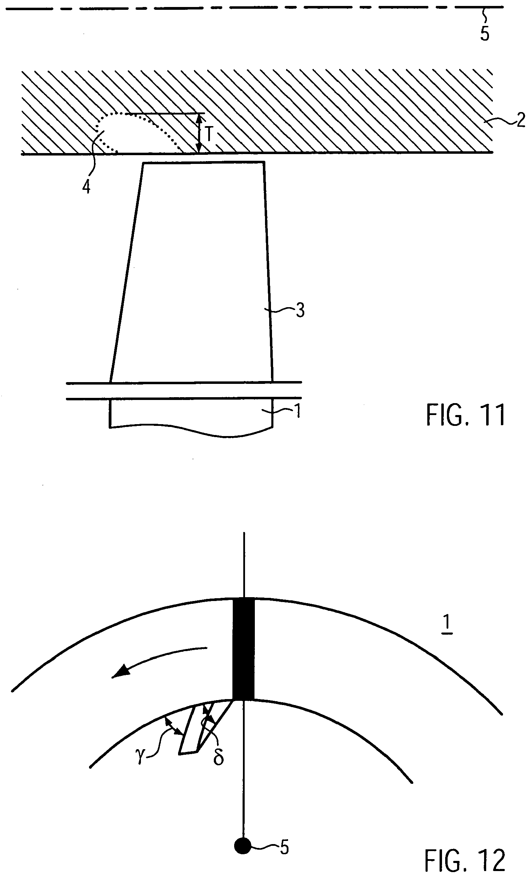

Die Fig. 11 zeigt die erfindungsgemäß bevorzugte Tiefe der Ausnehmung 4, welche maximal 50° der axialen Sehnenlänge betragen sollte. Ein bevorzugter Wert liegt bei 35 %.

Die Fig. 12 zeigt die Zuordnung des Winkels in Umfangsrichtung (Rotationsrichtung). Der Winkel γ der vorderen Flächen beträgt bevorzugterweise zwischen 30° und 60°, der Winkel δ der hinteren Fläche zwischen 30° und 60°. Die beiden Winkel können gleich oder auch in axialer und radialer Richtung gesehen, unterschiedlich und sich innerhalb einer Nut ändernd ausgebildet sein. Im letzten Falle führt dies zu einer radialen und axialen Biegung der Kontur. Die obere Begrenzung der Ausnehmung 4 (radial außen) kann mit einer scharfen Kante oder als Rundung ausgeführt sein.

Die in Fig. 12 gezeigten Winkel γ und δ können sich in Strömungsrichtung verändern, wobei die Änderung der Winkel voneinander unabhängig sein kann. Der Winkel γ, der die Gesamtneigung bzw. Außenneigung der Ausnehmung 4 bestimmt, kann dabei entsprechend variiert werden.

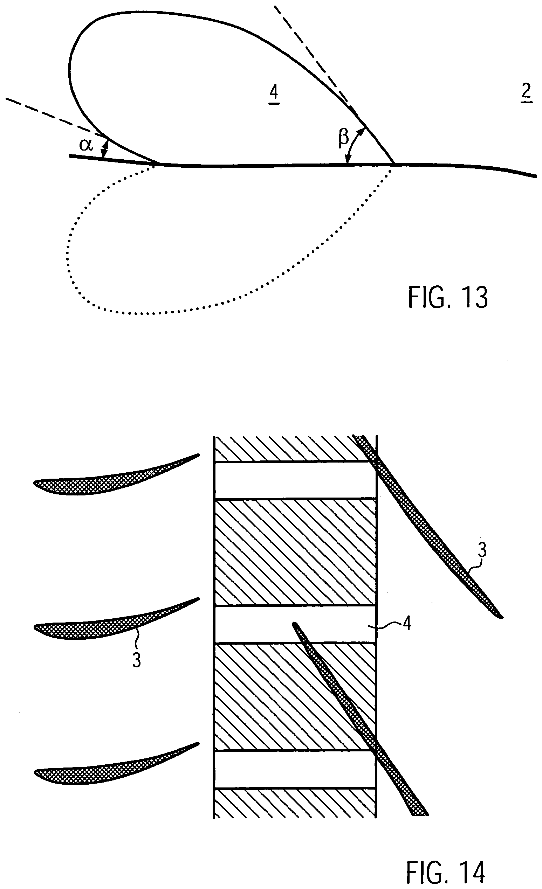

Die Fig. 13 zeigt ein besonders bevorzugtes Ausführungsbeispiel der Form der Ausnehmung 4, ähnlich einer halben Herzform (die strichlierte Linie verdeutlicht die gesamte Herzform). Der Konturverlauf der Ausnehmung 4 ist bevorzugterweise mathematisch stetig und/oder differenzierbar.

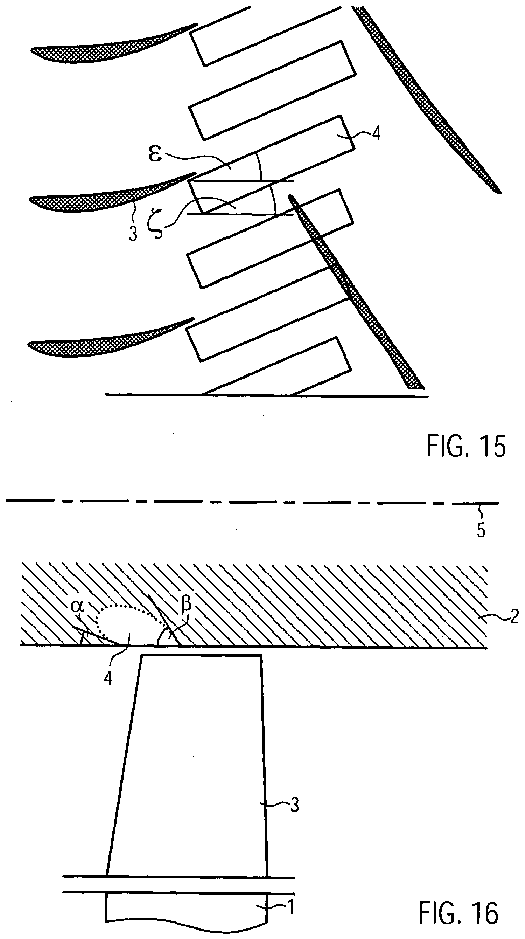

Die in Fig. 13 gezeigte halbe Herzform wird bestimmt durch die beiden Winkelschenkel der Winkel α und β, siehe auch Fig. 16. Wie in Fig. 16 dargestellt, spannen die beiden Winkelschenkel der Winkel α und β den Anfangsbereich bzw. Endbereich der durch die halbe Herzform vorgegebenen Querschnittskurve auf. Dabei sind die Winkelschenkel, wie in Fig. 16 dargestellt, tangential zu dem anfangsseitigen bzw. endseitigen Kurvenverlauf angeordnet (siehe gestrichelte Linien in Fig.13).

Der weitere Verlauf der Kurve (halbe Herzform) ist so gewählt, dass er stetig ist und damit zweimal differenzierbar. Somit entstehen keine Krümmungssprünge. Die Winkel α und β werden gemäß den An- und Abströmbedingungen des Rotors gewählt.

Der weitere Kurvenverlauf der halben Herzform kann beispielsweise durch B-Splines und/oder Bezier-Kurven definiert werden. Es handelt sich um eine Kardioide, bei welcher zusätzlich noch eine Rotation um eine Achse (Koordinatentransformation) durchgeführt wurde.

Aus Fig. 14 ergibt sich der bevorzugte Deckungsgrad, welcher definiert wird als das Verhältnis der offenen Fläche, gebildet durch die Ausnehmungen 4, zu der insgesamt in axialer Richtung (Umfangsrichtung) begrenzten Fläche, innerhalb welcher die Ausnehmungen 4 angeordnet sind. Die Überdeckung ist bevorzugterweise kleiner als 50 %, in bevorzugter Ausgestaltung bei 30 %.

Die Fig. 14 zeigt eine Ausgestaltung, bei welcher pro Schaufelteilung (Abstand zweier benachbarter Schaufeln) eine Nut oder Ausnehmung 4 vorgesehen ist. Es ist auch möglich, weniger Ausnehmungen 4 vorzusehen, beispielsweise eine Nut oder Ausnehmung 4 für zwei Schaufelpassagen bzw. drei Schaufeln. Es kann sich somit ergeben, dass am Umfang der rotierenden Welle 2 beispielsweise nur acht bis zehn Ausnehmungen 4 oder Nuten ausgebildet sind.

Weiterhin ist in diesem Zusammenhang darauf hinzuweisen, dass es nicht erforderlich ist, die Nuten oder Ausnehmungen 4 gleichmäßig am Umfang zu verteilen. Diese können vielmehr auch ungleichmäßig und voneinander unabhängig verteilt sein.

Die Fig. 15 zeigt den vorgesehenen Staffelungswinkel. Der Winkel ε liegt in einem Bereich von +30° bis -30°, bevorzugterweise bei 0°. Die gleichen Werte ergeben sich für den Winkel ζ. Die Winkel können entweder gleich sein oder sich in axialer oder radialer Richtung innerhalb der Ringnut (Ausnehmung 4) ändern. Hierdurch ergibt sich eine axiale und radiale Biegung der Ringnut 4.

Die Fig. 16 zeigt die erfindungsgemäße Zuordnung der Winkel der Eintritts- und Austrittsflanken. Der Austrittswinkel α beträgt bevorzugterweise zwischen 20° und 70°, der Eintrittswinkel β zwischen 30° und 80°. Die beiden Winkel α und β können erfindungsgemäß gleich oder unterschiedlich ausgestaltet sein und können sich auch, in Umfangsrichtung gesehen, innerhalb der Ausnehmung 4 (Ringkanalwandnut) ändern.

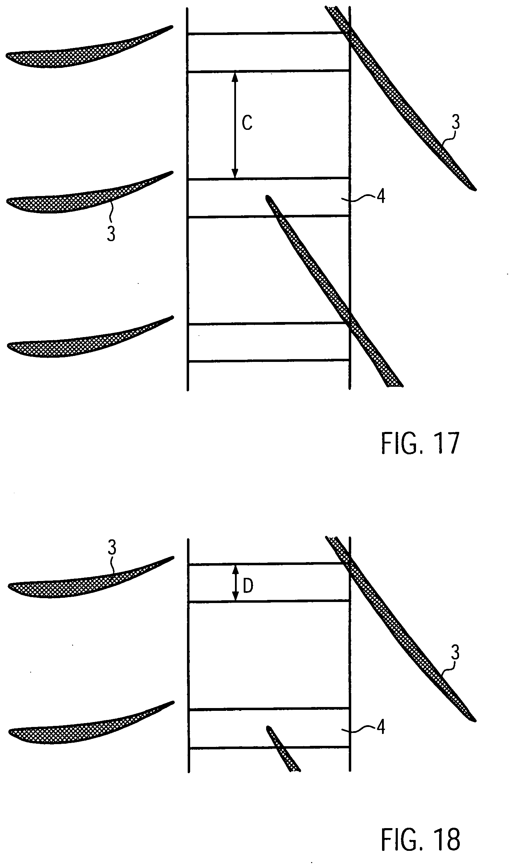

Die Fig. 17 zeigt den Abstand der einzelnen Ausnehmungen 4 voneinander. Der Abstand C kann am Umfang gleich sein, er kann auch variiert werden. Außerdem kann er sich in radialer und/oder axialer Richtung ändern, wobei insgesamt der oben genannte Überdeckungsgrad erzielt werden muss.

Die Fig. 18 zeigt die vorgesehene Breite der Nuten, welche maximal 15 % des Abstands von einem Rotor zum nächsten beträgt und sich in Abhängigkeit von der radialen Position und der axialen Position verändern kann.

Die Grundform der Ausnehmungen kann eckig, rund oder oval sein, sie kann auch mit radialer Ausdehnung variieren.

Weiterhin können erfindungsgemäß die einzelnen Ausnehmungen gleich dimensioniert sein oder sich im Rahmen der oben genannten Parameter unterscheiden.

## Patentansprüche

1. Strömungsarbeitsmaschine mit einem von einem Gehäuse (1) und einer rotierenden Welle (2) gebildeten Strömungspfad, in welchem Reihen von Schaufeln (3) angeordnet sind, wobei in einem Spitzenbereich der Schaufel (3) in einer Ringkanalwandung der Welle (2) zumindest eine Ausnehmung (4) angeordnet ist, wobei die Ausnehmung (4) als Umfangsnut ausgebildet ist und der Querschnitt und die Lage der Ausnehmung (4) wie folgt definiert sind:
- die axiale Anordnung ist so gewählt, dass sich eine Teillänge (A) der Ausnehmung (4) um max. 30 % der Sehnenlänge einer Schaufel (3) vor deren Vorderkante aus gegen die Strömungsrichtung und bis max. 50 % der Sehnenlänge der Schaufel (3) von deren Vorderkante aus in Strömungsrichtung erstreckt,
- der Winkel (α) der Eintrittsflanke der Ausnehmung (4) ist zwischen 30° und 80° zur Wandung des Gehäuses (1) geneigt, und der Winkel (β) der Austrittsfläche der Ausnehmung (4) ist zwischen 20° und 70° zur Wandung des Gehäuses (1) geneigt,
- die radiale Tiefe der Ausnehmung beträgt max. 50 % der axialen Sehnenlänge der Schaufel (3), und
- die Ausnehmung (4) ist im Querschnitt einer halbierten Herzform angenähert,
- der Verlauf der Kurve der halbierten Herzform ist so gewählt, dass dieser stetig und zweimal differenzierbar ist.

2. Strömungsarbeitsmaschine nach Anspruch 1, **dadurch gekennzeichnet, dass** die Tiefe der Ausnehmung (4) 35 % der axialen Sehnenlänge der Schaufel beträgt.

3. Strömungsarbeitsmaschine nach einem der Ansprüche 1 oder 2, **dadurch gekennzeichnet, dass** ein Staffelungswinkel (ε) der Vorderkante der Ausnehmung (4) in Axialrichtung zwischen +30° und -30° beträgt.

4. Strömungsarbeitsmaschine nach einem der Ansprüche 1 bis 3, **dadurch gekennzeichnet, dass** ein Staffelungswinkel (ζ) der Hinterkante der Ausnehmung (4) in Axialrichtung zwischen +30° und -30° beträgt.

5. Strömungsarbeitsmaschine nach einem der Ansprüche 1 bis 4, **dadurch gekennzeichnet, dass** die Breite (D) der Ausnehmung (4) max. 15 % des Abstands von einem Rotor zum nächsten beträgt.

## Claims

1. Fluid-flow machine with a flow path formed by a casing (1) and a rotating shaft (2), in which rows of blades (3) are provided, wherein at least one recess (4) is arranged in a blade (3) tip area in an annulus duct wall of the shaft (2), wherein the recess (4) is designed as a circumferential groove, and the cross-section and the position of the recess (4) are defined as follows:
- the axial arrangement is selected such that a partial length (A) of the recess (4) extends by max. 30 percent of the chord length of a blade (3) from the blade leading edge against the direction of flow, and up to max. 50 percent of the chord length of the blade (3) from the blade leading edge in the direction of flow,
- the angle (α) of the leading flank of the recess (4) is inclined by 30° to 80° to the wall of the casing (1), and the angle (β) of the trailing flank of the recess (4) is inclined by 20° to 70° to the wall of the casing (1),
- the radial depth of the recess is max. 50 percent of the axial chord length of the blade (3), and
- the recess (4) in its cross-section is similar to a half-heart shape,
- the course of the curve of the half-heart shape is selected such that it is continuous and two times differentiable.

2. Fluid-flow machine in accordance with Claim 1, **characterized in that** the depth of the recess (4) is 35 percent of the axial chord length of the blade.

3. Fluid-flow machine in accordance with one of the Claims 1 or 2, **characterized in that** a stagger angle (ε) of the leading edge of the recess (4) lies between +30° and -30° in the axial direction.

4. Fluid-flow machine in accordance with one of the Claims 1 to 3, **characterized in that** a stagger angle (ζ) of the trailing edge of the recess (4) lies between +30° and -30° in the axial direction.

5. Fluid-flow machine in accordance with one of the Claims 1 to 4, **characterized in that** the width (D) of the recess (4) is max. 15 percent of the distance between one rotor and the next.

## Revendications

1. Machine à écoulement avec une voie d'écoulement formée par un carter (1) et un arbre (2) en rotation, dans laquelle sont disposées des rangées d'aubes (3), sachant qu'au moins un évidement (4) est disposé dans une zone de bout de l'aube (3) dans une paroi de canal annulaire de l'arbre (2), sachant que l'évidement (4) est conçu sous forme de rainure circonférentielle et que la section et la position de l'évidement (4) sont définies comme suit:
- la disposition axiale est choisie de sorte à ce qu'une longueur partielle (A) de l'évidement (4) s'étende de 30 % max. de la longueur de corde d'une aube (3) à partir du bord d'attaque de celle-ci dans le sens inverse à l'écoulement et jusqu'à 50 % de la longueur de corde de l'aube (3) à partir du bord d'attaque de celle-ci dans le sens d'écoulement,
- l'angle (α) du flanc d'attaque de l'évidement (4) est incliné d'une valeur comprise entre 30° et 80° par rapport à la paroi du carter (1), et l'angle (β) du flanc de fuite de l'évidement (4) est incliné d'une valeur comprise entre 20° et 70° par rapport à la paroi du carter (1),
- la profondeur radiale de l'évidement s'élève à 50 % max. de la longueur de corde axiale de l'aube (3), et
- l'évidement (4) en coupe transversale est semblable à la forme d'un demi-coeur,
- le tracé de la courbe de la forme du demi-coeur est choisi de sorte à être continu et différentiable deux fois.

2. Machine à écoulement selon la revendication n° 1, **caractérisée en ce que** la profondeur de l'évidement (4) correspond à 35 % de la longueur de corde axiale de l'aube.

3. Machine à écoulement selon une des revendications n° 1 ou n° 2, **caractérisée en ce qu'**un angle de décalage (ε) du bord d'attaque de l'évidement (4) est compris entre +30° et -30° dans le sens axial.

4. Machine à écoulement selon une des revendications n° 1 à n° 3, **caractérisée en ce qu'**un angle de décalage (ζ) du bord de fuite de l'évidement (4) est compris entre +30° et -30° dans le sens axial.

5. Machine à écoulement selon une des revendications n° 1 à n° 4, **caractérisée en ce que** la largeur (D) de l'évidement (4) correspond à 15 % max. de l'écart entre un rotor et le rotor suivant.
